# EUROPEAN PATENT APPLICATION

(11) **EP 0 679 905 A1**
(43) Date of publication of application: **02.11.1995**
(21) Application number: 94120962.9
(22) Date of filing: 30.12.1994
(51) Int. Cl.: G01S 13/24, G01S 7/03

(54) **Radar system with digital signal synthesizer**

(30) Priority: 28.04.1994 US 234035
(71) Applicant: ROCKWELL INTERNATIONAL CORPORATION, Seal Beach, California 90740-8250 (US)
(72) Inventor: Waineo, Douglas K., Placentia, California 92670 (US)
(74) Representative: Wagner, Karl H., Dipl.-Ing.

(57) **Abstract**

Signals from a direct digital synthesizer 205 and a stable oscillator 210 are mixed in an upconversion mixer 115, the output of which is applied through a directional coupler 275 to a pulse modulator 170 and a downconversion mixer 140. Making the synthesizer 205 digital allows the (inexpensive) directional coupler 275 to replace an (expensive) second upconversion mixer and oscillator of the prior art.

## Description

### Background of the Invention

The present invention relates to radar systems and has particular relation to the use of a direct digital signal synthesizer in such systems.

A radar system requires two signals near the radar frequency. A radio frequency (RF) signal is needed for the transmit pulse, and a local oscillator (LO) signal is needed for down-converting the received echoes. These signals must be accurately controlled both as to amplitude and as to frequency. The hardware needed to generate them is therefore expensive.

### The Prior Art

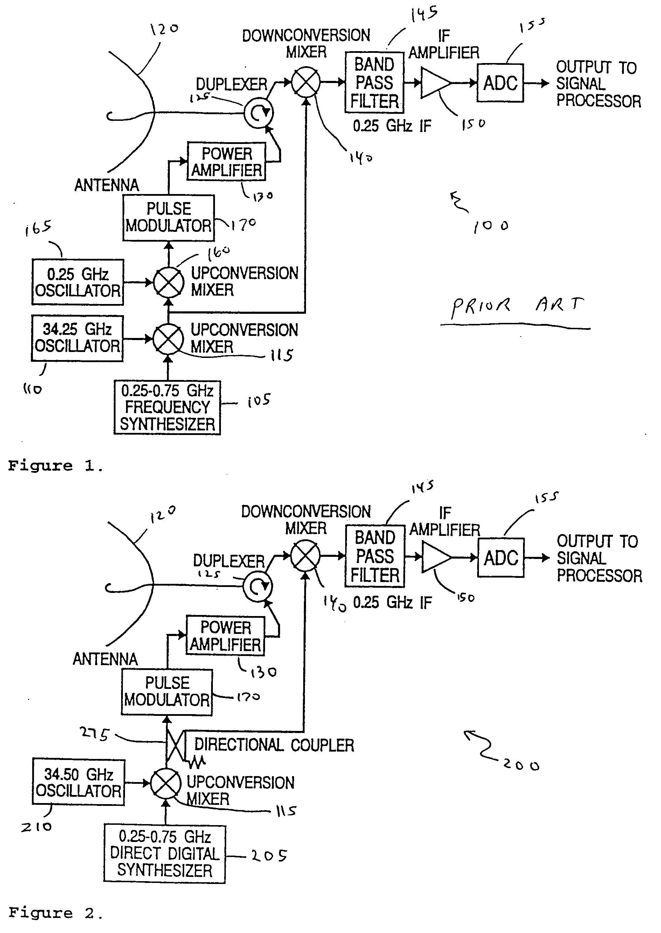

FIG. 1 is a block diagram of a conventional, prior art, radar system 100 using typical frequencies. Other frequencies may be used as required by the application. A frequency agility bandwidth of 0.50 GHz is required. During the transmit phase, this band is centered at a transmitting operating frequency of 35.00 GHz; i.e., the transmitting band extends from 34.75 GHz to 35.25 GHz. However, these signals once received must be down-converted to an Intermediate frequency (IF) of 0.25 MHz. Therefore, during the receive phase, this band is centered at a receiving operating frequency which is 0.25 GHz lower, at 35.00 GHz; i.e., the receiving band extends from 34.50 GHz to 35.00 GHz.

### Receive Phase

To produce these bands, the output of a 0.25-0.75 GHz controllable frequency synthesizer 105 is mixed with the output of a 34.25 GHz stable oscillator 110 In a first upconversion mixer 115. The output of the first upconversion mixer 115 acts as the local oscillator, and has an operating band extending from 34.50 GHz to 35.00 GHz. This is exactly what is required for the receiving band.

While this receiving band is being generated by the local oscillator, signals are being received from an antenna 120. These signals are passed to a duplexer 125. The duplexer 125 Is structured to connect the antenna 120 either to a power amplifier 130, during the transmit phase, or to a downconversion mixer 140 during the receive phase, but not both.

The downconversion mixer 140 also receives the LO output from the first upconversion mixer 115. The output of the downconversion mixer 140 is passed through a band pass filter 145, which has a passband with a center at the intermediate frequency of 0.25 GHz and a width which is as narrow as possible. The filtered signal is amplified by an intermediate frequency amplifier 150, the output of which is digitized by an analog-to-digital converter 155. The digitized signals may then be processed by a processor forming no part of the present invention.

### Transmit Phase

The transmitting band is formed by taking the output of the first mixer 115 and mixing it, in a second upconversion mixer 160, with the output of 0.25 GHz stable oscillator 165. The transmitting band may then be modulated to form a radar pulse by a pulse modulator 170, the output of which is amplified by the power amplifier 130 referred to above.

### Brief Description of the Drawings

FIG. 1 is a block diagram of a conventional, prior art, radar system.

FIG. 2 Is a block diagram of a radar system according to the present Invention.

### Detailed Description of the Drawings

FIG. 1 is a block diagram of a conventional, prior art, radar system. It has been described in the Background of the Invention, and will not be discussed further.

FIG. 2 is a block diagram of a radar system 200 according to the present Invention, using the frequencies typified in FIG. 1.

### Design Opportunity

A design opportunity, not noticed before the present Invention, lies In two facts. First, two components (the downconversion mixer 140 and pulse modulator 170) need to be driven by suitable bands. Second, these bands are not required to be applied to both components simultaneously. The transmit band need be applied to the pulse modulator 170 only during the transmit phase, and the receive band need be applied to the downconversion mixer 140 only during the receive phase. If a device could be fashioned which would rapidly and precisely toggle between the frequencies required for the two phases, much expensive hardware could be eliminated.

The present invention exploits this design opportunity. A 0.25-0.75 Ghz direct digital synthesizer 205 replaces the 0.25-0.75 controllable frequency synthesizer 105 of the prior art. This is done because the direct digital synthesizer 205 can be instantly switched between the transmitting frequency band and the receiving frequency band. It is therefore not necessary to offset these two bands by the intermediate frequency; a common frequency band may be used both during the transmit phase and during the receive phase. This is done by having the upper half of the receiving band (35.00-35.25 GHz in the above example) be used for the lower half of the transmit band (34.75-35.00 GHz), and vice versa. As long as the receiving and transmitting frequencies are separated by the intermediate frequency, it doesn't matter which is higher and which is lower.

If the existing band of 34.75-35.25 GHz is to be used, the 34.25 GHz oscillator 110 of the prior art must be replaced by a 34.50 Ghz oscillator 210. That is, the frequency must be increased by the amount of the Intermediate frequency. This is a straightforward substitution once Its necessity is recognized. If desired, the operating frequency of the radar may be reduced by the amount of the intermediate frequency, and the prior art oscillator 110 may be continued unchanged.

### Advantages of the Present Invention

This seems at first to be a pointless substitution. It is desired to reduce expense, yet the first upconversion mixer 115 has been retained unchanged, the marginally higher frequency oscillator 210 is just as expensive as the lower frequency oscillator 110, and the direct digital synthesizer 205 costs about as much as the controllable frequency synthesizer 105. However, two items of substantial cost, the second upconversion mixer 160 and the intermediate frequency oscillator 165, are now capable of being replaced with a single, inexpensive component: a directional coupler 275.

The directional coupler 215 is used instead of a simple wire junction in order to prevent cross-talk between the downconversion mixer 140 and the pulse modulator 170. That is, the directional coupler 275 allows signals from the upstream component, the first upconversion mixer 115, to be applied to both of the downstream components, the pulse modulator 170 and the downconversion mixer 140; it does not, however, allow signals from either downstream component (generally created by reflection) to be applied to the other downstream component. The second upconversion mixer 160 performed a similar cross-talk-prevention function in the prior art.

### Preservation of Received Signal Phase

In some radar techniques, particularly moving target indication (MTI) it is necessary for the receiver to preserve the phase of the received signal. In both the prior art and In the present invention, received signal phase is preserved. In the prior art, this is due to the fact that all three oscillators 165, 110, and 105 are very stable in frequency. In the present invention, this Is due to the fact that the oscillator 210 is very stable in frequency and the direct digital synthesizer 205 changes frequency by precisely the same amount, and remains at the offset frequency for precisely the same time duration, during each radar pulse. This causes the phase of the received intermediate frequency signal to change by a predictable amount each pulse, and any effect of this can be removed In the signal processing computer. All so-called coherent radar techniques are thus supported by this invention.

### Breadth of Invention

A narrow embodiment of the present invention has been described in some detail, but the true spirit and scope of the present invention are not limited to this embodiment; they are limited only by the appended claims and their equivalents.

It should be noted that the objects and advantages of the invention may be attained by means of any compatible combination(s) particularly pointed out in the items of the following summary of the invention and the appended claims.
1. A radar system, comprising:
   (a) an antenna:
   (b) a duplexer connected to convey signals from a pulse modulator to the antenna during a transmit phase and to convey signals from the antenna to a downconversion mixer during a receive phase;
   (c) an upconversion mixer connected to drive the pulse modulator at least during the transmit phase and to drive the downconversion mixer at least during the receive phase;
   (d) a stable oscillator connected to drive the upconversion mixer during both the transmit phase and the receive phase; and
   (e) a direct digital synthesizer connected to drive the upconversion mixer during both the transmit phase and the receive phase, and constructed to synthesize a first frequency signal during the transmit phase and a second frequency signal during the receive phase.
2. The radar system comprising a band pass filter connected to be driven by the downconversion mixer, the band pass filter having a pass band centered at an intermediate frequency equal to the difference between the first frequency and the second frequency.
3. The radar system comprising an intermediate frequency amplifier connected to be driven by the band pass filter.
4. The radar system comprising an analog-to-digital converter connected to be driven by the intermediate frequency amplifier.
5. The radar system wherein the upconversion mixer is connected to drive the pulse modulator and to drive the downconversion mixer through a directional coupler, thereby establishing a barrier to cross-talk between the pulse modulator and the downconversion mixer.
6. The radar system comprising a band pass filter connected to be driven by the downconversion mixer, the band pass filter having a pass band centered at an intermediate frequency equal to the difference between the first frequency and the second frequency.
7. The radar system comprising an intermediate frequency amplifier connected to be driven by the band pass filter.
8. The radar system comprising an analog-to-digital converter connected to be driven by the intermediate frequency amplifier.
9. The radar system wherein the pulse modulator is connected to convey signals to the duplexer through a power amplifier.
10. The radar system comprising a band pass filter connected to be driven by the downconversion mixer, the band pass filter having a pass band centered at an intermediate frequency equal to the difference between the first frequency and the second frequency.
11. The radar system comprising an intermediate frequency amplifier connected to be driven by the band pass filter.
12. The radar system comprising an analog-to-digital converter connected to be driven by the intermediate frequency amplifier.
13. The radar system wherein the upconversion mixer is connected to drive the pulse modulator and to drive the downconversion mixer through a directional coupler, thereby establishing a barrier to cross-talk between the pulse modulator and the downconversion mixer.
14. The radar system comprising a band pass filter connected to be driven by the downconversion mixer, the band pass filter having a pass band centered at an intermediate frequency equal to the difference between the first frequency and the second frequency.
15. The radar system comprising an intermediate frequency amplifier connected to be driven by the band pass filter.
16. The radar system comprising an analog-to-digital converter connected to be driven by the intermediate frequency amplifier.

## Claims

1. A radar system, comprising:
(a) an antenna:
(b) a duplexer connected to convey signals from a pulse modulator to the antenna during a transmit phase and to convey signals from the antenna to a downconversion mixer during a receive phase;
(c) an upconversion mixer connected to drive the pulse modulator at least during the transmit phase and to drive the downconversion mixer at least during the receive phase;
(d) a stable oscillator connected to drive the upconversion mixer during both the transmit phase and the receive phase; and
(e) a direct digital synthesizer connected to drive the upconversion mixer during both the transmit phase and the receive phase, and constructed to synthesize a first frequency signal during the transmit phase and a second frequency signal during the receive phase.

2. The radar system of Claim 1, further comprising a band pass filter connected to be driven by the downconversion mixer, the band pass filter having a pass band centered at an intermediate frequency equal to the difference between the first frequency and the second frequency.

3. The radar system of Claim 2, further comprising an intermediate frequency amplifier connected to be driven by the band pass filter.

4. The radar system of Claim 3, further comprising an analog-to-digital converter connected to be driven by the intermediate frequency amplifier.

5. The radar system of Claim 1 , wherein the upconversion mixer is connected to drive the pulse modulator and to drive the downconversion mixer through a directional coupler, thereby establishing a barrier to cross-talk between the pulse modulator and the downconversion mixer.

6. The radar system of Claim 5, further comprising a band pass filter connected to be driven by the downconversion mixer, the band pass filter having a pass band centered at an intermediate frequency equal to the difference between the first frequency and the second frequency.

7. The radar system of Claim 6, further comprising an intermediate frequency amplifier connected to be driven by the band pass filter.

8. The radar system of Claim 7, further comprising an analog-to-digital converter connected to be driven by the intermediate frequency amplifier.

9. The radar system of Claim 1, wherein the pulse modulator is connected to convey signals to the duplexer through a power amplifier.

10. The radar system of Claim 9, further comprising a band pass filter connected to be driven by the downconversion mixer, the band pass filter having a pass band centered at an intermediate frequency equal to the difference between the first frequency and the second frequency,
preferably comprising an intermediate frequency amplifier connected to be driven by the band pass filter.
preferably further comprising an analog-to-digital converter connected to be driven by the intermediate frequency amplifier.
wherein preferably the upconversion mixer is connected to drive the pulse modulator and to drive the downconversion mixer through a directional coupler, thereby establishing a barrier to cross-talk between the pulse modulator and the downconversion mixer.
preferably further comprising a band pass filter connected to be driven by the downconversion mixer, the band pass filter having a pass band centered at an intermediate frequency equal to the difference between the first frequency and the second frequency.
preferably further comprising an intermediate frequency amplifier connected to be driven by the band pass filter.
preferably further comprising an analog-to-digital converter connected to be driven by the intermediate frequency amplifier.
